# EUROPÄISCHE PATENTSCHRIFT

(11) **EP 3 971 662 B1**
(45) Veröffentlichungstag und Bekanntmachung des Hinweises auf die Patenterteilung: **17.04.2024**
(21) Anmeldenummer: 20197341.9
(22) Anmeldetag: 22.09.2020
(51) Int. Cl.: G05B 19/042

(54) **VERFAHREN ZUM BETREIBEN EINES REDUNDANTEN AUTOMATISIERUNGSSYSTEMS**
METHOD FOR OPERATING A REDUNDANT AUTOMATION SYSTEM
PROCÉDÉ DE FONCTIONNEMENT D'UN SYSTÈME D'AUTOMATISATION REDONDANT

(43) Veröffentlichungstag der Anmeldung: 23.03.2022
(73) Patentinhaber: Siemens Aktiengesellschaft, 80333 München (DE)
(72) Erfinder: Grosch, Thomas, 90574 Roßtal (DE)
(74) Vertreter: Siemens Patent Attorneys

(56) Entgegenhaltungen:
- EP-A1- 2 857 913
- EP-A1- 2 860 598

## Beschreibung

Die Erfindung betrifft ein Verfahren zum Betreiben eines redundanten Automatisierungssystems zur Steuerung eines technischen Prozesses, wobei ein erstes fehlersicheres Teilsystem mit einem in erste Programmabschnitte unterteilten ersten Steuerprogramm betrieben wird, wobei die Steuerung des technischen Prozesses durch das erste fehlersichere Teilsystem durchgeführt wird, und ein zweites fehlersicheres Teilsystem mit einen in zweite Programmabschnitte unterteilten zweiten Steuerprogramm redundant betrieben wird, wobei das erste fehlersichere Teilsystem mit seinem ersten Steuerprogramm Ereignisse generiert und auswertet, welche eine Ausführungs-Reihenfolge der ersten Programmabschnitte im ersten Steuerprogramm gemäß den aufgetretenen Ereignissen beeinflusst, und auf Basis von den generierten oder aufgetretenen Ereignissen pro Programmabschnitt Synchronisationsdaten versehen mit einem Index, welcher den jeweiligen Programmabschnitt wiederspiegelt, für das zweite fehlersichere Teilsystem bereitstellt und Ausgangsdaten für Ausgabemittel bereitstellt, wobei die Ausgangsdaten zunächst zurückgehalten werden und noch nicht zu den Ausgabemitteln geschrieben werden, wobei das erste Teilsystem mit der Bearbeitung der jeweiligen ersten Programmabschnitte bezogen auf den Index der Bearbeitung der jeweiligen zweiten Programmabschnitte des zweiten Teilsystems dem zweiten Teilsystem vorausläuft.

Im Automatisierungsumfeld werden verstärkt hochverfügbare Lösungen (H-Systeme) gefordert, welche geeignet sind, eventuell auftretende Stillstandszeiten einer Anlage auf ein Minimum zu reduzieren. Ein im Automatisierungsumfeld eingesetztes H-System ist dadurch gekennzeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von einem der beiden Teilsysteme durchgeführt werden, nämlich von dem Teilsystem welches als Master arbeitet bzw. eine Masterfunktion übernommen hat.

Neben der Zuverlässigkeit des Automatisierungssystems muss ein derartiges Automatisierungssystem in der Automatisierungstechnik häufig noch zusätzlich sicherheitskritische Funktionen realisieren. Ein solches Automatisierungssystem wird im Folgenden als HF-System bezeichnet. Die zwei redundant zueinander arbeitenden Teilsystem (HF-CPU1 und HF-CPU2) sind nun zusätzlich in der Lage, ein sicherheitsgerichtetes Steuerprogramm abzuarbeiten. Zusätzlich kommunizieren sie über ein sicherheitsgerichtetes Protokoll mit einem ebenfalls sicherheitsgerichteten Ein-Ausgabe-Modul (F-IO).

Im Sinne der Erfindung werden die Synchronisationsdaten dafür genutzt, dass ein auf einem ersten Teilsystem aufgetretenes Ereignis mit einem zweiten Teilsystem synchronisiert wird, damit für den Fall, dass das erste Teilsystem ausfällt, der Verlauf eines zu steuernden technischen Prozesses dann sofort von dem zweiten Teilsystem übernommen werden kann. Ohne Kenntnis des Ereignisses, welches auf dem ersten Teilsystem stattgefunden hat, kann die Ausführungs-Reihenfolge der Programmabschnitte auf dem zweiten Teilsystem nicht eingehalten werden. Nur in Kenntnis der Ereignisse auf dem ersten Teilsystem kann das zweite Teilsystem auch die erforderlichen Programmabläufe durchlaufen und der Verlauf eines zu steuernden technischen Prozesses wird nicht gestört.

Weiterhin im Sinne der Erfindung sind sicherheitsgerichtete HF-CPU's bzw. die jeweils fehlersicheren Teilsysteme in der Lage, Fehler bei der Verarbeitung ihrer Steuerprogramme zu diagnostizieren und daraufhin die Anlage bzw. das jeweilige Teilsystem in einen sicheren Zustand zu versetzen.

Die Erfinder haben erkannt, dass bei einer Realisierung eines redundant arbeitenden Automatisierungssystems basierend auf zwei fehlersicheren Teilsystemen (zwei HF-CPU's) folgendes Problem entsteht. Das erste fehlersichere Teilsystem arbeitet als vorauslaufende HF-CPU und erkennt in ihrer lokalen Verarbeitung einen Fehler, z.B. durch einen Hardwaredefekt verursacht. Mit dieser Fehlererkennung wird sich diese selbst deaktivieren. Aber durch die bereits stattgefundene Übermittlung der Synchronisationsdaten von dem ersten fehlersicheren Teilsystem zu dem zweiten fehlersicheren Teilsystem können weitere Fehler entstehen. Oder anders gesagt, die vorauslaufende HF-CPU wird die nachlaufende HF-CPU mit fehlerhaften Synchronisationsdaten versorgen. Die nachlaufende HF-CPU bzw. das zweite fehlersichere Teilsystem wird nun daraufhin kurze Zeit später ebenfalls ein Fehler in ihrer Verarbeitung entdecken und sich deaktivieren. Das Problem ist nun, dass beide Teilsysteme (beide HF-CPU's), die nun deaktiviert sind, zum Verlust der Anlagensteuerung führt. Die Fehlerreaktion auf der nachlaufenden HF-CPU ist jedoch nur durch die Synchronisation von fehlerhaften Daten entstanden. Die nachlaufende HF-CPU könnte aber die Steuerung des Prozesses problemlos fortsetzen.

In der EP 2 857 913 A1 wird ein redundantes Automatisierungssystem mit mehreren miteinander verbundenen Automatisierungsgeräten beschrieben.

Die EP 2 860 598 A1 beschreibt ein Verfahren zum Betreiben eines redundanten Automatisierungssystems, wobei ein Slave Diagnosefunktionen durchführt.

Demnach ist es die Aufgabe der Erfindung für ein Verfahren zum Betrieb eines redundanten Automatisierungssystems mit einem ersten fehlersicheren Teilsystem und einem zweiten fehlersicheren Teilsystem zu gewährleisten, dass bei Ausfall des ersten fehlersicheren Teilsystems, dass zweite fehlersichere Teilsystem nicht mit fehlerbehafteten Sycnhronisationsdaten versorgt wird.

Die Aufgabe wird erfindungsgemäß durch ein Verfahren nach Anspruch 1 gelöst.

Insbesondere ist es so, dass in dem zweiten Teilsystem die Synchronisationsdaten zunächst zwischengespeichert werden, wobei das erste fehlersichere Teilsystem die bereitgestellten Ausgangsdaten versehen mit dem Index des jeweiligen ersten Programmabschnitts zunächst an das zweite fehlersichere Teilsystem schickt und das zweite fehlersichere Teilsystem dies durch eine Ausgabequittung zum ersten fehlersicheren Teilsystem quittiert, im ersten fehlersicheren Teilsystem am Ende des jeweiligen Programmabschnittes eine Fehlerprüfung durchgeführt wird, mit welcher der fehlerfreie Ablauf des ersten Steuerungsprogramm im jeweiligen Programmabschnitt geprüft wird, für den Fall, dass ein Fehler erkannt wird, das erste fehlersichere Teilsystem deaktiviert wird und die Steuerung des technischen Prozesses durch das zweite fehlersichere Teilsystem durchgeführt wird, für den Fall, dass eine Fehlerfreiheit erkannt wird, das erste fehlersichere Teilsystem eine Fehlerfrei-Nachricht an das zweite fehlersichere Teilsystem sendet, woraufhin diese die Fehlerfrei-Nachricht mit einer Fehlerfrei-Quittung quittiert und die zunächst zwischengespeicherten Synchronisationsdaten mit dem zu dem Index passenden zweiten Programmabschnitt verarbeitet, mit Empfang der Fehlerfrei-Quittung durch das erste fehlersichere Teilsystem, die ersten Ausgangsdaten zu den Ausgabemitteln geschrieben werden.

Das erste fehlersichere Teilsystem kann auch als ein vorauslaufendes System und das zweite fehlersichere Teilsystem kann dementsprechend als ein nachlaufendes System betrachtet werden. Wird nun, eine Ausgabe von Ausgangsdaten durch das vorauslaufende System durchgeführt, so ist diese Ausgabe zunächst von dem nachlaufenden System zu quittieren. Dies stellt eine Stoßfreiheit der Ausgänge bei Ausfall des vorauslaufenden Systems sicher. Das nachlaufende System speichert die Synchronisationsdaten lokal in beispielsweise einen IIFO-Speicher, verarbeitet sie jedoch zunächst nicht. Ausgaben von Ausgangsdaten zu einer Peripherie führt das vorauslaufende System erst dann durch, nach dem eine Fehler-Prüfung erfolgt ist, welche die fehlerfreie Bearbeitung des jeweiligen Programmabschnitts bestätigt. Eine Fehler-Prüfung findet üblicherweise am Ende eines jeden Programmbschnittes (z.B. Abschnitt n) auf dem vorauslaufenden System statt.

Wird bei dieser Prüfung die Fehlerfreiheit festgestellt, so signalisiert das vorauslaufende System dies dem nachlaufenden System mit einer speziellen Nachricht ("F-Prüfung o.k."). Diese Nachricht veranlasst das nachlaufende System die bisher gespeicherten Synchronisationsdaten zu verarbeiten und am Ende des Abschnitts n ihrerseits ebenfalls eine F-Prüfung durchzuführen.

Das vorauslaufende System gibt die Ausgangsdaten, nach der Fehlerfrei-Quittung durch das nachlaufende System, zur Peripherie aus. Der nächste Abschnitt beginnt vorzugsweise erst dann, wenn das nachlaufende System ebenfalls den Abschnitt n absolviert hat und dies dem vorauslaufenden System mit einer Zyklusquittung quittiert hat.

Demnach ist es von Vorteil, dass das zweite Teilsystem eine Zyklusquittung an das erste Teilsystem sendet, welche bestätigt, dass der mit dem Index zugehörige zweite Programmabschnitt erfolgreich fehlerfrei bearbeitet wurde.

Für den Fall, dass ein Fehler auf dem ersten fehlersicheren Teilsystem erkannt wird, verwirft das zweite fehlersichere Teilsystem alle Synchronisationsdaten, die nach der letzten Fehlerfrei-Quittung abgespeichert wurden und übernimmt die Steuerung des Prozesses im Einzelbetrieb.

Zeigt beispielsweise das erste Teilsystem einen Fehler in dem nächsten Abschnitt n+1, so deaktiviert sich das erste Teilsystem sofort. Das zweite Teilsystem verwirft nun alle Synchronisationsdaten, die nach der letzten "F-Prüfung o.k."-Nachricht im FIFO-Speicher zu finden sind. Das zweite Teilsystem wechselt somit in den Solo-Betrieb. Damit wird die bisher nachlaufende HF-CPU, nämlich das zweite Teilsystem, nun zum führenden Teilsystem und führt nun den Abschnitt n+1 aus, was zu einer entsprechend längeren Reaktionszeit des Systems beim Ausfall des vorauslaufenden Systems führt. Die etwas längere Reaktionszeit könnte durch folgende Lösung reduziert werden. Demnach ist es von Vorteil, wenn die Synchronisationsdaten im zweiten Teilsystem unabhängig von der Fehlerfrei-Nachricht sofort mit dem zu dem Index passenden zweiten Programmabschnitt verarbeitet werden, und für den Fall, dass die Fehlerfrei-Nachricht an dem zweiten fehlersicheren Teilsystem ankommt, wird zusätzlich eine Sicherung des Programmzustandes in ein Speicherabbild gesichert, für den Fall, das die Fehlerfrei-Nachricht ausbleibt und das erste Teilsystem ausgefallen ist, wird die letzte Sicherung des Programmzustandes aus dem Speicherabbild geladen und die Programmbearbeitung wird mit diesem Programmzustand fortgesetzt und die Steuerung des technischen Prozesses wird durch das zweite fehlersichere Teilsystem durchgeführt.

Diese Optimierung der Reaktionszeit wird dadurch erreicht, dass das nachlaufende System die empfangenen Synchronisationsdaten sofort verarbeitet ohne die Nachricht "F-Prüfung o.k." abzuwarten. Um eine Fehlerverschleppung von den vorauslaufenden System auf das nachlaufende System trotzdem zu vermeiden, speichert das nachlaufende System den aktuellen Zustand, nämlich ein Speicherabbild, des nahezu synchron laufenden Programms am Ende eines Programmabschnittes ab, sobald das nachlaufende System die Nachricht "F-Prüfung o.k." empfängt bzw. empfangen hat. Eine lokale Speicherung des Programmzustandes über ein Speicherabbild ist sehr performant realisierbar im gleichen Zuge löscht das nachlaufende System das Speicherabbild des vorausgegangenen Abschnitts. Sobald das nachlaufende System das Ende eines Programmabschnittes erreicht hat, quittiert es dies zum vorauslaufenden System. Dieses kann daraufhin sofort den nächsten Programmabschnitt starten. Dies beschleunigt den Ablauf des Systems und reduziert damit auch die Reaktionszeiten.

Erkennt das nachlaufende System den Ausfall des vorauslaufenden Systems so lädt das nachlaufende System das zuletzt gesicherte Speicherabbild und beginnt mit der eigenständigen Verarbeitung der Prozesswerte/Ereignisse im Solo-Betrieb. Die bereits empfangenen und bereits verarbeitenden Synchronisationsdaten aus Abschnitt n+2 werden dementsprechend verworfen, weil sie potenziell verfälschte Anweisungen enthalten können.

Auch als vorteilhaft wird angesehen, dass eine Übertragung der Synchronisationsdaten von dem vorauslaufenden System zu dem nachlaufenden System zeitlich asynchron erfolgen kann. Dadurch wird zum einen eine Verarbeitungsleistung des vorauslaufenden Systems von der für eine Ereignissynchronisation zur Verfügung stehenden, Kommunikationsbandbreite entkoppelt, was insbesondere im Hinblick auf das zunehmende Ungleichgewicht zwischen der Steigerung der Verarbeitungsleistung der Prozessoren einerseits und Steigerung der Kommunikationsprozessoren entgegensteht.

Aufgrund der zeitlich asynchronen Kommunikation zwischen dem vorauslaufenden System und dem nachlaufenden System ist es möglich, auch langsame Kommunikationsverbindungen für den Aufbau eines hochverfügbaren Automatisierungssystems zu nutzen. Dies bedeutet, dass auch eine an sich im Hinblick auf die Übertragungsbandbreite oder Antwortzeit schlechte Kommunikationsverbindung oder auch eine Kommunikationsverbindung vorgesehen werden kann, die auch von anderen Kommunikationsteilnehmern genutzt wird und damit den beiden Teilnehmern nicht explosiv für diese Synchronisationszwecke zur Verfügung steht.

Anhand der Zeichnung, in der ein Ausführungsbeispiel der Erfindung veranschaulicht ist, werden im Folgenden die Erfindung, deren Ausgestaltung und die Vorteile näher erläutert. Es zeigen:
- FIG 1: ein redundantes Automatisierungssystem nach dem Stand der Technik,
- FIG 2: ein verfahrensgemäßer Ablauf für ein redundantes Automatisierungssystem in einer ersten alternativen Ausgestaltung,
- FIG 3: ein verfahrensgemäßer Ablauf für ein redundantes Automatisierungssystem gemäß einer zweiten alternativen Ausgestaltung und
- FIG 4: den Ablauf für ein redundantes Automatisierungssystem gemäß einer dritten alternativen Ausgestaltung.

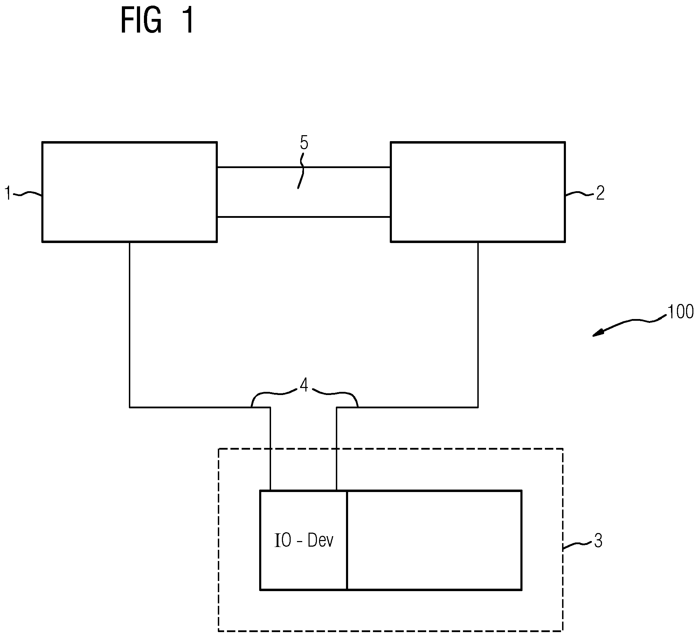

Gemäß FIG 1 ist ein redundantes Automatisierungssystem 100 zur Steuerung eines technischen Prozesses dargestellt. Nach dem Stand der Technik ist ein erstes fehlersicheres Teilsystem 1 mit einem zweiten fehlersicheren Teilsystem 2 über einen Kommunikationskanal 5 für Synchronisationsdaten gekoppelt. Das erste fehlersichere Teilsystem 1 und das zweite fehlersichere Teilsystem 2 sind jeweils über einen Feldbus 4 mit einer Peripherie 3 gekoppelt. In der Peripherie 3 sind Ausgabemittel IO-Dev vorhanden.

Ein Nachteil an dem bekannten redundanten Automatisierungssystem 100 nach dem Stand der Technik gemäß FIG 1 ist es, dass bei einer Synchronisation des zweiten fehlersicheren Teilsystems 2 durch das erste fehlersichere Teilsystem 1 fehlerhafte Synchronisationsdaten übermittelt werden können. Mit diesen fehlerhaften Synchronisationsdaten könnte das zweite fehlersichere Teilsystem ebenfalls gestört werden.

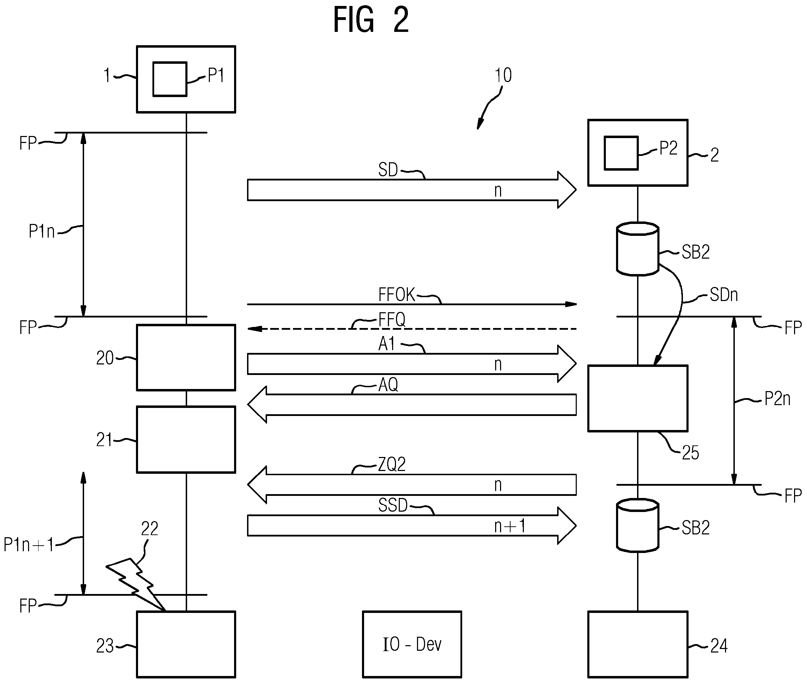

Mit der FIG 2 ist ein erster verfahrensgemäßer Lösungsansatz dargestellt um das Problem, dass das zweite fehlersichere Teilsystem 2 mit fehlerhaften Synchronisationsdaten arbeitet, zu umgehen.

Wie nach dem Stand der Technik gemäß FIG 1, ist das erste fehlersichere Teilsystem 1 kommunikativ mit dem zweiten fehlersicheren Teilsystem 2 verbunden und es werden Synchronisationsdaten SD ausgetauscht. In dem ersten fehlersicheren Teilsystem 1 ist ein in erste Programmabschnitte P1n unterteiltes erstes Steuerprogramm P1 vorhanden und wird entsprechend betrieben. In dem zweiten fehlersicheren Teilsystem 2 wird ein zweites Steuerprogramm P2, welches in zweite Programmabschnitte P2n unterteilt ist, redundant zum ersten Steuerprogramm P1 betrieben.

Das erste fehlersichere Teilsystem 1 mit seinem ersten Steuerprogramm P1 generiert und wertet Ereignisse aus. Diese Ereignisse, welche programm- und prozessbedingt sind, beeinflussen eine Ausführungs-Reihenfolge der ersten Programmabschnitte P1n im ersten Steuerprogramm P1. Damit das zweite fehlersichere Teilsystem 2 von diesen beeinflussenden Ereignissen Kenntnis bekommt, werden vom ersten fehlersicheren Teilsystem 1 pro Programmabschnitt P1n Synchronisationsdaten SD versehen mit einem Index n, welcher dem jeweiligen Programmabschnitt P1n wiederspiegelt, für das zweite fehlersichere Teilsystem 2 bereitgestellt.

Auch werden im ersten fehlersicheren Teilsystem 1 durch das erste Steuerprogramm P1 Ausgangsdaten A1 für die Ausgabemittel IO-Dev bereitgestellt, wobei die Ausgangsdaten A1 zunächst zurückgehalten werden und noch nicht zu den Ausgabemitteln IO-Dev geschrieben werden. In der Regel läuft das erste Teilsystem 1 mit der Bearbeitung der jeweiligen ersten Programmabschnitte P1n bezogen auf den Index n der Bearbeitung der jeweiligen zweiten Programmabschnitte P2n des zweiten Teilsystems 2 dem zweiten Teilsystem 2 voraus.

Um nun zu vermeiden, dass das zweite Teilsystem 2 mit fehlerhaften Synchronisationsdaten SD arbeitet, werden in dem zweiten Teilsystem 2 in einem zweiten Speicherbereich SB2 die Synchronisationsdaten SD zunächst zwischengespeichert.

Da im ersten fehlersicheren Teilsystem 1 am Ende eines jeweiligen Programmabschnittes P1n eine Fehler-Prüfung FP durchgeführt wird, kann ein fehlerfreier Ablauf des ersten Steuerprogramms P1 im jeweiligen Programmabschnitt P1n signalisiert werden. Wird eine Fehlerfreiheit erkannt, so wird das erste fehlersichere Teilsystem 1 eine Fehlerfrei-Nachricht FFOK an das zweite fehlersichere Teilsystem 2 senden, woraufhin dieses die Fehlerfrei-Nachricht FFOK mit einer Fehlerfrei-Quittung FFQ quittiert und die zunächst zwischengespeicherten Synchronisationsdaten SD werden aus dem zweiten Speicherbereich SB2 zur Datenverarbeitung herausgelesen und mit den für den Index n passenden zweiten Programmabschnitt P2n verarbeitet. Mit Empfang der Fehlerfrei-Quittung FFQ werden durch das erste fehlersichere Teilsystem 1 die Ausgangsdaten A1 zu den Ausgabemitteln IO-Dev geschrieben. Dementsprechend ist im senkrechten zeitlichen Verlauf zu dem ersten fehlersicheren Teilsystem 1 zyklisch eine Fehlerprüfung FP eingeführt. Es werden jeweils die Programmabschnitte P1n,P1n+1 durchgeführt. Wesentlich ist hier das die Ausgangsdaten A1 zwar schon in dem Schritt 20 übertragen wurden und dem im zweiten fehlersicheren Teilsystem 2 bereitgestellt wurden, aber noch nicht durch den Schritt 21 zu dem Prozess bzw. zu den Ausgabemitteln IO-Dev geschrieben worden sind.

Gemäß der Verfahrensbeschreibung für die FIG 2 ist in dem ersten Programmabschnitt P1n kein Fehler aufgetreten, aber in dem nächsten Programmabschnitt P1n+1 tritt am Ende der Fehler-Prüfung FP ein Fehlerfall 22 auf. Für den Fall, dass ein Fehler erkannt wurde, wird das erste fehlersichere Teilsystem 1 deaktiviert. Es geht in einen Stopp 23 Zustand und die Steuerung des technischen Prozesses wird durch das zweite fehlersichere Teilsystem 2 durchgeführt. Das zweite fehlersichere Teilsystem 2 geht demnach in einen Einzelbetrieb 24 und lädt demnach nicht die vermeintlich fehlerhaften Synchronisationsdaten aus dem zweiten Speicherbereich SB2.

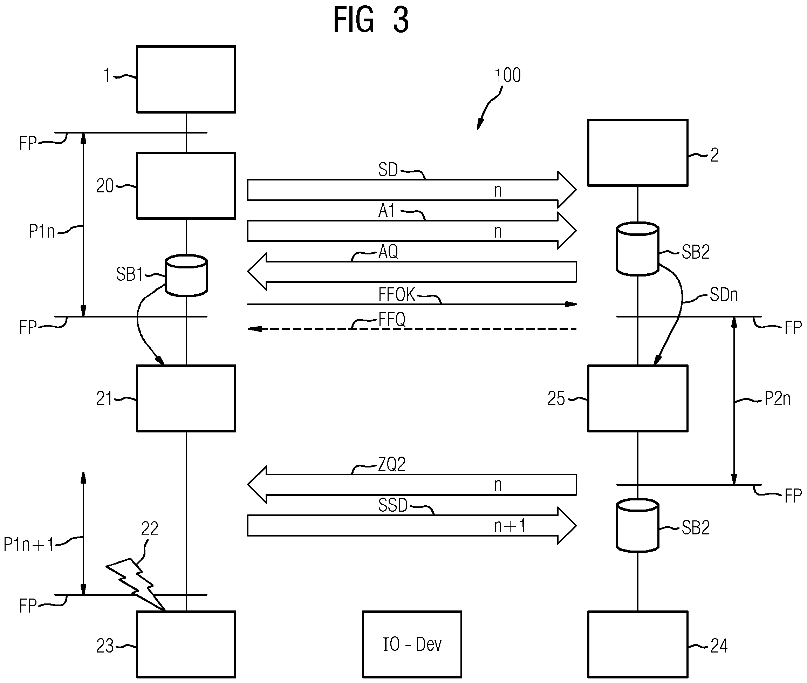

Gemäß der FIG 3 werden in diesem alternativen Verfahren die Ausgangsdaten A1 und eine Ausgabequittung AQ bereits vor der Fehler-Prüfung FP miteinander ausgetauscht, aber erst mit der abgesendeten fehlerfreien Nachricht FFOK und der dementsprechend empfangenen Fehlerfrei-Quittung FFQ werden über den Schritt 21 die Ausgangsdaten A1 zum Prozess geschrieben.

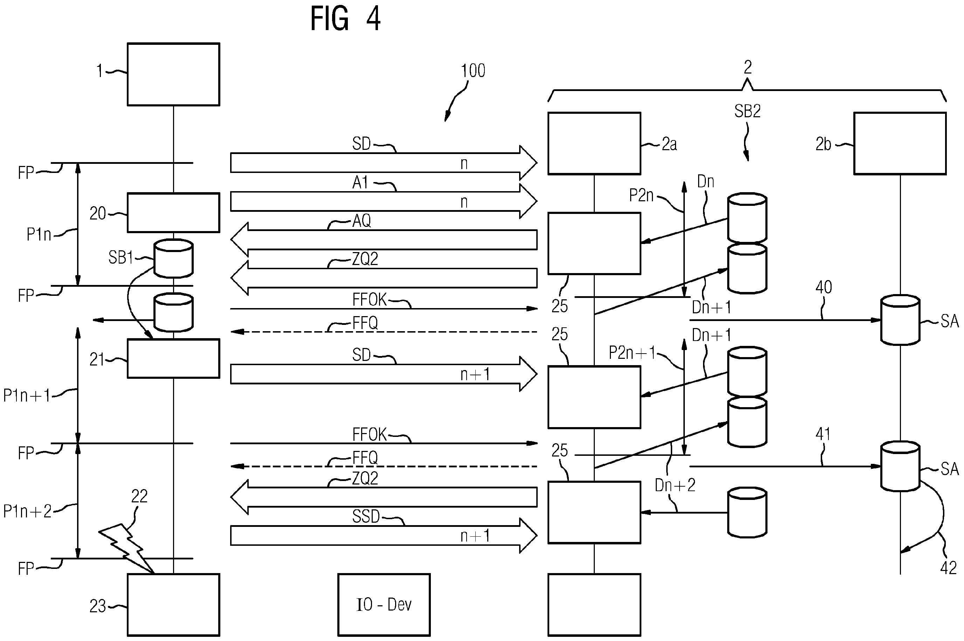

Bezogen auf die Reaktionszeiten des Gesamtsystems wird das Verfahren gemäß FIG 4 als effizientes Verfahren angesehen.

Hier ist vorgesehen, dass die Synchronisationsdaten SD in dem zweiten Teilsystem 2 unabhängig von der Fehlerfrei-Nachricht FFOK sofort mit dem zu den Index n passenden zweiten Programmabschnitt P2n verarbeitet werden. Für eine bessere Darstellung ist das zweite fehlersichere Teilsystem 2 in einem Prozessorbereich 2a und einen Speicherbereich 2b unterteilt. Mit dem Schritt Datenverarbeitung 25 wird klar, dass in dem Prozessorbereich 2a die eingehenden Synchronisationsdaten SD für den zweiten Programmabschnitt P2n sofort verarbeitet werden. Parallel dazu wird das zweite fehlersichere Teilsystem 2 schon mit den Ausgangsdaten A1 versorgt. Es sendet dementsprechend die Ausgabequittung AQ und auch eine Zyklusquittung ZQ2. Nun kommt es im ersten fehlersicheren Teilsystem 1 zur F-Prüfung FP, welche eine Fehlerfreiheit des ersten Programmabschnitts P1n bestätigt. Aufgrund dieser Fehlerfreiheit werden die zwischengespeicherten Ausgangsdaten A1 nun zum Prozess geschrieben und dem zweiten fehlersicheren Teilsystem 2 wird die Fehlerfrei-Nachricht FFOK übermittelt. Dadurch wird im zweiten fehlersicheren Teilsystem 2 eine Sicherung des Programmzustandes PM in ein Speicherabbild SA ausgelöst. Mit dem Schritt 40 wird ein Speicherabbild n gesichert. Für den Fall, dass die Fehlerfrei-Nachricht FFOK ausbleibt und das erste Teilsystem 1 ausgefallen ist, wird die letzte Sicherung des Programmzustandes Pn-1 aus dem Speicherabbild SA geladen und die Programmbearbeitung wird mit diesem Programmzustand fortgesetzt und die Steuerung des technischen Prozesses wird durch das zweite fehlersichere Teilsystem 2 durchgeführt.

## Patentansprüche

1. Verfahren zum Betreiben eines redundanten Automatisierungssystems (100) zur Steuerung eines technischen Prozesses, wobei ein erstes fehlersicheres Teilsystem (1) mit einem in erste Programmabschnitte (P1n) unterteilten ersten Steuerprogramm (P1) betrieben wird, wobei die Steuerung des technischen Prozesses durch das erste fehlersichere Teilsystem (1) durchgeführt wird, und ein zweites fehlersicheres Teilsystem (2) mit einem in zweite Programmabschnitte (P2n) unterteilten zweiten Steuerprogramm (P2) redundant betrieben wird,
wobei das erste fehlersichere Teilsystem (1) mit seinem ersten Steuerprogramm (P1) Ereignisse generiert und auswertet, welche eine Ausführungs-Reihenfolge der ersten Programmabschnitte (P1n) im ersten Steuerprogramm (P1) gemäß den aufgetretenen Ereignissen beeinflusst, und auf Basis von den generierten oder aufgetretenen Ereignissen pro Programmabschnitt (P1n) Synchronisationsdaten (SD) versehen mit einem Index (n), welcher den jeweiligen Programmabschnitt (P1n) widerspiegelt, für das zweite fehlersichere Teilsystem (2) bereitstellt und
Ausgangsdaten (A1) für Ausgabemittel (IO-Dev) bereitstellt, wobei die Ausgangsdaten (A1) zunächst zurückgehalten werden und noch nicht zu den Ausgabemitteln (IO-Dev) geschrieben werden, wobei das erste Teilsystem (1) mit der Bearbeitung der jeweiligen ersten Programmabschnitte (P1n) bezogen auf den Index (n) der Bearbeitung der jeweiligen zweiten Programmabschnitte (P1n) des zweiten Teilsystems (2) dem zweiten Teilsystem (2) vorausläuft,
**dadurch gekennzeichnet, dass**
- in dem zweiten Teilsystem (2) die Synchronisationsdaten (SD) zunächst zwischengespeichert werden, das erste fehlersichere Teilsystem (1) die bereitgestellten Ausgangsdaten (A1) versehen mit dem Index (n) des jeweiligen ersten Programmabschnitts (P1n) zunächst an das zweite fehlersichere Teilsystem (2) schickt und das zweite fehlersichere Teilsystem (2) dies durch eine Ausgabequittung (AQ) zum ersten fehlersicheren Teilsystem (1) quittiert,
- im ersten fehlersicheren Teilsystem (1) am Ende des jeweiligen Programmabschnittes (P1n) eine Fehler-Prüfung (FP) durchgeführt wird, mit welcher der fehlerfreie Ablauf des ersten Steuerprogramms (P1) im jeweiligen Programmabschnitt (P1n) geprüft wird,
- für den Fall, dass ein Fehler erkannt wird, das erste fehlersichere Teilsystem (1) deaktiviert wird und die Steuerung des technischen Prozesses durch das zweite fehlersichere Teilsystem (2) durchgeführt wird,
- für den Fall, dass eine Fehlerfreiheit erkannt wird, das erste fehlersichere Teilsystem (1) eine Fehlerfrei-Nachricht (FFOK) an das zweite fehlersichere Teilsystem (2) sendet, woraufhin dieses die Fehlerfrei-Nachricht (FFOK) mit einer Fehlerfrei-Quittung (FFQ) quittiert und die zunächst zwischen gespeicherten Synchronisationsdaten (SD) mit dem zu dem Index (n) passenden zweiten Programmabschnitt (P2n) verarbeitet,
- mit Empfang der Fehlerfrei-Quittung (FFQ) durch das erste fehlersichere Teilsystem (1), die ersten Ausgangsdaten(A1) zu den Ausgabemitteln (IO-Dev) geschrieben werden.

2. Verfahren nach Anspruch 1, wobei das zweite Teilsystem (2) eine Zyklusquittung (ZQ2) an das erste Teilsystem (1) sendet, welche bestätigt, dass der mit dem Index (n) zugehörige zweite Programmabschnitt (P2n) erfolgreich und fehlerfrei bearbeitet wurde.

3. Verfahren nach Anspruch 1 oder 2, wobei
für den Fall, dass ein Fehler auf dem ersten fehlersicheren Teilsystem (1) erkannt wird, das zweite fehlersichere Teilsystem (2) alle Synchronisationsdaten (SD) verwirft, die nach der letzten Fehlerfrei-Quittung (FFQ) abgespeichert wurden und übernimmt die Steuerung des Prozesses im Einzelbetrieb.

4. Verfahren nach Anspruch 1, wobei
die Synchronisationsdaten (SD) in dem zweiten Teilsystem (2) unabhängig von der Fehlerfrei-Nachricht (FFOK) sofort mit dem zu dem Index (n) passenden zweiten Programmabschnitt (P2n) verarbeitet werden, und
- für den Fall, dass die Fehlerfrei-Nachricht (FFOK) an dem zweiten fehlersicheren Teilsystem (2) ankommt wird zusätzlich eine Sicherung des Programmzustandes (Pₙ) in ein Speicherabbild (SA) gesichert,
- für den Fall, dass die Fehlerfrei-Nachricht (FFOK) ausbleibt und das erste Teilsystem (1) ausgefallen ist, wird die letzte Sicherung des Programmzustandes (Pₙ₋₁) aus dem Speicherabbild (SA) geladen und die Programmbearbeitung wird mit diesem Programmzustand fortgesetzt und die Steuerung des technischen Prozesses wird durch das zweite fehlersichere Teilsystem (2) durchgeführt.

## Claims

1. Method for operating a redundant automation system (100) for controlling a technical process, wherein a first fail-safe subsystem (1) is operated with a first control program (P1) divided into first program sections (P1n), wherein the control of the technical process is carried out by the first fail-safe subsystem (1), and a second fail-safe subsystem (2) is operated redundantly with a second control program (P2) divided into second program sections (P2n),
wherein the first fail-safe subsystem (1) with its first control program (P1) generates and evaluates events which influences an execution sequence of the first program sections (P1n) in the first control program (P1) according to the events which have occurred and on the basis of the generated events or events which have occurred per program section (P1n) makes available synchronisation data (SD) provided with an index (n), which reflects the respective program section (P1n), for the second fail-safe subsystem (2) and
makes available original data (A1) for output means (IO-Dev), wherein the original data (A1) is initially held back and is not yet written to the output means (IO-Dev), wherein the first subsystem (1) precedes the second subsystem (2) with the processing of the respective first program sections (P1n) in relation to the index (n) of the processing of the respective second program sections (P1n) of the second subsystem (2), **characterised in that**
- in the second subsystem (2), the synchronisation data (SD) is initially buffered, the first fail-safe subsystem (1) initially sends the available original data (A1) provided with the index (n) of the respective first program section (P1n) to the second fail-safe subsystem (2) and the second fail-safe subsystem (2) acknowledges this by acknowledging an output (AQ) to the first fail-safe subsystem (1),
- an error check (FP) is carried out in the first fail-safe subsystem (1) at the end of a respective program section (P1n), with which error check the error-free cycle of the first control program (P1) is checked in the respective program section (P1n),
- in the event that an error is identified, the first fail-safe subsystem (1) is deactivated and the control of the technical process is carried out by the second fail-safe subsystem (2),
- in the event that no errors are identified, the first fail-safe subsystem (1) sends an error-free message (FFOK) to the second fail-safe subsystem (2), whereupon this acknowledges the error-free message (FFOK) with an error-free acknowledgment (FFQ) and processes the initially buffered synchronisation data (SD) with the second program section (P2n) matching the index (n),
- upon receipt of the error-free acknowledgement (FFQ) by the first fail-safe subsystem (1), the first original data (A1) is written to the output means (IO-Dev).

2. Method according to claim 1, wherein the second subsystem (2) sends a cycle acknowledgement (ZQ2) to the first subsystem (1), which confirms that the second program section (P2n) associated with the index (n) has been processed successfully and without errors.

3. Method according to claim 1 or 2, wherein
in the event that an error is identified on the first fail-safe subsystem (1), the second fail-safe subsystem (2) rejects all synchronisation data (SD), which was stored after the last error-free acknowledgement (FFQ) and takes over the control of the process in standalone operation.

4. Method according to claim 1, wherein
the synchronisation data (SD) in the second subsystem (2) is processed independently of the error-free message (FFOK) immediately with the second program section (P2n) which matches the index (n), and
- in the event that the error-free message (FFOK) arrives at the second fail-safe subsystem (2), the program state (Pₙ) is additionally backed up in a core image (SA),
- in the event that the error-free message (FFOK) is absent and the first subsystem (1) has failed, the last backup of the program state (Pₙ₋₁) is downloaded from the core image (SA) and the program processing is continued with this program state and the control of the technical process is carried out by the second fail-safe subsystem (2) .

## Revendications

1. Procédé pour faire fonctionner un système (100) d'automatisation redondant de commande d'un processus technique, dans lequel on fait fonctionner un premier système (1) partiel sécurisé à l'erreur par un premier programme (P1) de commande subdivisé en des premières parties (P1n) de programme, dans lequel on effectue la commande du processus technique par le premier système (1) partiel sécurisé à l'erreur, et on fait fonctionner, de manière redondante, un deuxième système (2) partiel sécurisé à l'erreur par un deuxième programme (P2) de commande subdivisé en des deuxièmes parties (P2n) de programme,
dans lequel, le premier système (1) partiel sécurisé l'erreur crée et évalue, par son premier programme (P1) de commande, des événements, qui influent sur une séquence de réalisation des premières parties (P1n) de programme dans le premier programme (P1) de commande suivant les événements, qui se sont produits, et, sur la base des événements créés ou produits, met à disposition du deuxième système (2) partiel sécurisé à l'erreur, par partie (P1n) de programme, des données (SD) de synchronisation pourvues d'un indice (n), qui reflète la partie (P1n) de programme respective, et
met à disposition des moyens (IO-Dev) d'édition des données (A1) de sortie, dans lequel on retient d'abord les données (A1) de sortie et on ne les enregistre pas encore dans les moyens (IO-Dev) d'édition, dans lequel le premier système (1) partiel se déroule avant le deuxième système (2) partiel par le traitement des premières parties (P1n) de programme respectives rapportées à l'indice (n) du traitement des deuxièmes parties (P1n) de programme respectives du deuxième système (2) partiel,
**caractérisé en ce que**
- dans le deuxième système (2) partiel, on met d'abord en mémoire tampon les données (SD) de synchronisation, le premier système (1) partiel sécurisé à l'erreur envoie les données (A1) de sortie mises à disposition munies de l'indice (n) de la première partie (P1n) de programme respective d'abord au deuxième système (2) partiel sécurisé à l'erreur et le deuxième système (2) partiel en accuse réception par un accusé (AQ) de réception d'édition au premier système (1) partiel sécurisé à l'erreur,
- dans le premier système (1) partiel sécurisé à l'erreur, on effectue, à la fin de la partie (P1n) de programme respective, un contrôle (FP) d'erreur, par lequel on contrôle le déroulement sans erreur du premier programme (P1) de commande dans la partie (P1n) de programme respective,
- dans le cas où l'on détecte une erreur, on désactive le premier système (1) partiel sécurisé à l'erreur et on effectue la commande du processus technique par le deuxième système (2) partiel sécurisé à l'erreur,
- dans le cas où l'on détecte une absence d'erreur, le premier système (1) partiel sécurisé à l'erreur envoie un message (FFOK) d'absence d'erreur au deuxième système (2) partiel sécurisé à l'erreur, celui-ci ensuite accuse réception du message (FFOK) d'absence d'erreur par un accusé de réception (FFQ) d'absence et traite les données (SD) de synchronisation d'abord mises en mémoire tampon par la deuxième partie (P2n) de programme s'adaptant à l'indice (n),
- à la réception de l'accusé de réception (FFQ) d'absence d'erreur par le premier système (1) partiel sécurisé à l'erreur, on enregistre les premières données (A1) de sortie dans les moyens (IO-Dev) d'édition.

2. Procédé suivant la revendication 1, dans lequel le deuxième système (2) partiel envoie au premier système (1) partiel un accusé réception (ZQ2) de cycle, qui confirme que la deuxième partie (P2n) de programme, qui appartient à l'indice (n), a été traitée avec succès et sans erreur.

3. Procédé suivant la revendication 1 ou 2, dans lequel,
dans le cas où l'on détecte une erreur sur le premier système (1) partiel sécurisé à l'erreur, le deuxième système (2) partiel sécurisé à l'erreur rejette toutes les données (SD) de synchronisation, qui ont été mises en mémoire après le dernier accusé de réception (FFQ) d'absence d'erreur, et prend en charge la commande du processus en fonctionnement individuel.

4. Procédé suivant la revendication 1, dans lequel
on traite les données (SD) de synchronisation dans le deuxième système (2) partiel indépendamment du message (FFOK) d'absence d'erreur immédiatement avec la deuxième partie (P2n) de programme s'adaptant à l'indice (n), et
- dans le cas où le message (FFOK) d'absence d'erreur arrive au deuxième système (2) partiel sécurisé à l'erreur, on sécurise supplémentairement une sécurisation de l'état (Pₙ) du programme dans une reproduction (SA) de mémoire,
- dans le cas où le message (FFOK) d'absence d'erreur est absent et le premier système (1) partiel est défaillant, on charge la dernière sécurisation de l'état (Pₙ₋₁) du programme dans la reproduction (SA) de mémoire et on poursuit le traitement du programme par cet état du programme et on effectue la commande du processus technique par le deuxième système (2) partiel sécurisé à l'erreur.
